# EUROPEAN PATENT APPLICATION

(11) **EP 4 460 121 A1**
(43) Date of publication of application: **06.11.2024**
(21) Application number: 21969495.7
(22) Date of filing: 29.12.2021
(51) Int. Cl.: H04W 72/04

(54) **BEAM MANAGEMENT INFORMATION INTERACTION METHOD AND APPARATUS, TERMINAL AND MEDIUM**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN)
(74) Representative: Novagraaf Technologies
(86) International application number: PCT/CN2021/142700
(87) International publication number: WO 2023/123127

(57) **Abstract**

The present application provides a beam management information interaction method and apparatus, a terminal and a medium, and relates to the technical field of communications. The method is executed by the terminal, and the method comprises: providing beam information of a first beam set to a first base station, the beam information of the first beam set being used for the first base station to determine beam information of an output beam set on the basis of a beam management model. According to the present application, a finer beam set can be generated by means of the beam management model, prediction and acquisition of multi-base-station and multi-frequency-band beam information are realized, and the transmission burden and the beam management burden can be reduced.

## Description

### TECHNICAL FIELD

The present disclosure relates to the technical field of communications, and in particular, relates to an information interaction method and apparatus for beam management, a terminal, and a medium.

### BACKGROUND

By beam management, a communication device selects a best beam from a plurality of beams to achieve better data transmission.

In the related art, a base station transmits different reference signals to reflect the quality of different beams, and a user equipment (UE) receives different reference signals to reflect the quality of different beams on a UE side. Then, the UE reports information such as an identifier of the beam, quality of the beams and the like obtained by the UE, and the base station determines the best beam based on the information reported by the UE.

A wireless communication system requires a large number of beams with a relatively narrow beam width, and in the related art, more reference signals need to be used to indicate more quality information of the beams, thereby causing a large workload and difficulty in implementation of the wireless communication system.

### SUMMARY

Embodiments of the present disclosure provide an information interaction method and an apparatus for beam management, a terminal, and a medium, and provide an information interaction method for achieving beam management based on a beam management model, such that the burden of a wireless communication system is reduced.

According to an aspect of the embodiments of the present disclosure, an information interaction method for beam management is provided. The method is applicable to a terminal, and the method includes:
providing beam information of a first beam set to a first base station, wherein the beam information of the first beam set is configured for the first base station to determine beam information of an output beam set based on a beam management model.

According to another aspect of the embodiments of the present disclosure, an information interaction apparatus for beam management is provided. The apparatus includes:
a first transmitting module, configured to provide beam information of a first beam set to a first base station, wherein the beam information of the first beam set is configured for the first base station to determine beam information of an output beam set based on a beam management model.

According to another aspect of the embodiments of the present disclosure, an information interaction method for beam management is provided. The method is applicable to a terminal, and the method includes:
acquiring beam information of a first beam set; and
acquiring beam information of an output beam set by processing the beam information of the first beam set based on a beam management model.

According to another aspect of the embodiments of the present disclosure, an information interaction apparatus for beam management is provided. The apparatus includes:
a second receiving module, configured to acquire beam information of a first beam set; and
a second processing module, configured to acquire beam information of an output beam set by processing the beam information of the first beam set based on a beam management model.

According to another aspect of the embodiments of the present disclosure, a terminal is provided. The terminal includes:
a processor;
a transceiver connected to the processor; and
a memory configured to store one or more instructions executable by the processor,
wherein the processor is configured to load and execute the one or more instructions to perform any one of the information interaction methods for beam management as described above.

According to another aspect of the embodiments of the present disclosure, a chip is provided. The chip is configured to perform any one of the information interaction methods for beam management as described above.

According to another aspect of the embodiments of the present disclosure, a computer-readable storage medium is provided. The computer-readable storage medium stores at least one instruction, at least one program, a code set, or an instruction set, and the at least one instruction, the at least one program, the code set, or the instruction set, when loaded and executed by the processor, causes the processor to perform any one of the information interaction methods for beam management as described above.

The technical solutions according to the embodiments of the present disclosure achieve the following beneficial effects:

determining the beam information of the output beam set corresponding to the beam information of the first beam set by the beam management model. The base station only needs to provide a small amount of reference signals to enable the beam management model to generate a more comprehensive and finer beam set or a more optimal beam set. In addition, the beam management model predicts and acquires the beam information of a plurality of base stations and a plurality of frequency bands based on the generated beam set, such that the burdens of transmission and beam management are reduced.

### BRIEF DESCRIPTION OF DRAWINGS

FIG. 1 is a schematic diagram of a communication system according to an exemplary embodiment;
FIG. 2 is a schematic diagram of a method for implementing a beam management model according to an exemplary embodiment;
FIG. 3 is a flowchart of an information interaction method for beam management according to an exemplary embodiment;
FIG. 4 is a flowchart of an information interaction method for beam management according to an exemplary embodiment;
FIG. 5 is a flowchart of an information interaction method for beam management according to an exemplary embodiment;
FIG. 6 is a schematic diagram of an information interaction method for beam management according to some exemplary embodiments of the present disclosure;
FIG. 7 is a flowchart of an information interaction method for beam management according to some exemplary embodiments of the present disclosure;
FIG. 8 is a schematic diagram of an information interaction method for beam management according to some exemplary embodiments of the present disclosure;
FIG. 9 is a flowchart of an information interaction method for beam management according to some exemplary embodiments of the present disclosure;
FIG. 10 is a schematic diagram of an information interaction method for beam management according to some exemplary embodiments of the present disclosure;
FIG. 11 is a flowchart of an information interaction method for beam management according to some exemplary embodiments of the present disclosure;
FIG. 12 is a schematic diagram of an information interaction method for beam management according to some exemplary embodiments of the present disclosure;
FIG. 13 is a flowchart of a type of transmission radio channel according to some exemplary embodiments of the present disclosure;
FIG. 14 is a schematic diagram of an information interaction method for beam management according to some exemplary embodiments of the present disclosure;
FIG. 15 is a flowchart of an information interaction method for beam management according to some exemplary embodiments of the present disclosure;
FIG. 16 is a schematic diagram of an information interaction method for beam management according to some exemplary embodiments of the present disclosure;
FIG. 17 is a flowchart of an information interaction method for beam management according to some exemplary embodiments of the present disclosure;
FIG. 18 is a schematic diagram of an information interaction method for beam management according to an exemplary embodiment;
FIG. 19 is a flowchart of an information interaction method for beam management according to some exemplary embodiments of the present disclosure;
FIG. 20 is a schematic diagram of an information interaction method for beam management according to some exemplary embodiments of the present disclosure;
FIG. 21 is a block diagram of an information interaction apparatus for beam management according to some exemplary embodiments of the present disclosure;
FIG. 22 is a block diagram of an information interaction apparatus for beam management according to some exemplary embodiments of the present disclosure;
FIG. 23 is a schematic structural diagram of a terminal according to some exemplary embodiments of the present disclosure; and
FIG. 24 is a schematic structural diagram of a network device according to some exemplary embodiments of the present disclosure.

### DETAILED DESCRIPTION

For clearer descriptions of the objects, technical solutions, and advantages of the present disclosure, embodiments of the present disclosure are further described in detail below with reference to the accompanying drawings.

The network architecture and service scenarios described in the embodiments of the present disclosure are intended to describe the technical solutions in the embodiments of the present disclosure more clearly, but do not constitute any limitation on the technical solutions. Those of ordinary skilled in the art are clear that, with the evolution of the network architecture and the emergence of new service scenarios, the technical solutions according to the embodiments of the present disclosure are also applicable to solving similar technical problems.

The technical solutions according to the embodiments of the present disclosure are applicable to various communication systems, such as a global system of mobile communication (GSM) system, a code division multiple access (CDMA) system, a wideband code division multiple access (WCDMA) system, a general packet radio service (GPRS) system, a long-term evolution (LTE) system, an advanced long-term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN) system, a wireless fidelity (Wi-Fi) system, a 5^{th} generation (5G) system, or other communication systems.

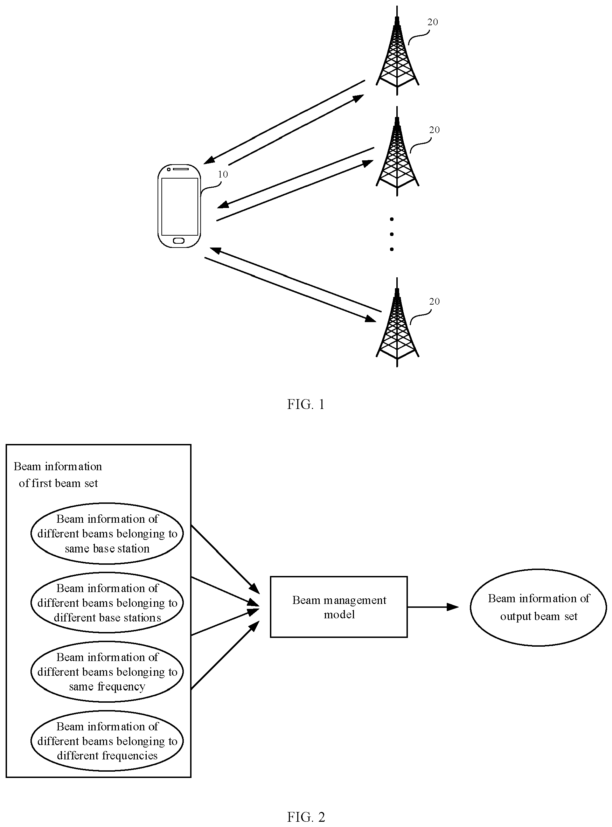

FIG. 1 shows a schematic diagram of a mobile communication system according to some embodiments of the present disclosure. The mobile communication system includes a terminal 10 and a network device 20.

Typically, a plurality of terminals 10 are deployed, and one or more terminals 10 may be distributed in a cell managed by each network device 20. The terminals 10 may include various handheld devices, vehicle-mounted devices, wearable devices, computing devices, or other processing devices connected to a radio modem with a mobile communication function, as well as various forms of user equipments (UEs), mobile stations (MSs), or the like. For convenience of description, in the embodiments of the present disclosure, the devices described above are collectively referred to as terminals.

One or more network devices 20 are deployed. The network device 20 is an apparatus deployed in an access network to provide a mobile communication function for the terminal 10. The network device 20 may include various forms of macro base stations, micro base stations, relay stations, access points, location management function (LMF) entities, or the like. The network device 20 is a base station within a serving cell of the terminal 10 or a base station within a candidate serving cell of the terminal 10. In systems using different radio access technologies, a device with functionality of an access network device may have different names. For example, the device is referred to as a gNodeB or a gNB in the 5G NR system. As communication technologies evolve, the name may change. For convenience of description, in the embodiments of the present disclosure, the apparatus for providing terminal 10 with the mobile communication function is collectively referred to as a base station. The network device 20 and the terminal 10 may establish a connection therebetween over an air interface, and then communicate with each other through the connection, including signaling and data interaction. Two adj acent network devices 20 further communicate with each other in a wired or wireless manner. The terminal 10 may switch between different network devices 20, that is, establishing connections with different network devices 20.

The " 5G NR system" in the embodiments of the present disclosure may also be referred to as a 5G system or an NR system, and those skilled in the art may understand the meaning thereof. The technical solutions described in the embodiments of the present disclosure are applicable to the 5G NR system, and also to an evolved system of the 5G NR system.

FIG. 2 shows a schematic diagram of a method for implementing a beam management model according to some exemplary embodiments of the present disclosure. The embodiments are illustrated for use in the communication system as shown in FIG. 1, and the beam management model is deployed on the terminal or is deployed on the base station.

The beam management model is configured to restore the beam information of a first beam set as known to acquire the beam information of an output beam set. Alternatively, the beam management model is configured to perform beam selection on the beam information of the first beam set as known to acquire the output beam set. For example, the first beam set is a subset of a full beam set including complete beams for beam management, and the output beam model is capable of restoring the full beam set based on the first beam set. In one specific example, in the case that achieving beam management requires the base station to use 1024 sets of reference signals, in the embodiments of the present disclosure, the base station only provides 512 sets of reference signals. In this case, the input of the beam management model is a first beam set including 512 beams, and the beam management model restores the beam information of the first beam set to acquire an output beam set including 1024 beams. For example, the first beam set includes beams of a plurality of frequencies, the beams of different frequencies correspond to different beam information, and the beam management model determines the beam information corresponding to the beam of the target frequency from the first beam set.

The input to the beam management model is the beam information of the first beam set. The beam information of the first beam set includes at least one of beam information of different beams belonging to a same base station, beam information of different beams belonging to different base stations, beam information of different beams belonging to a same frequency, or beam information of different beams belonging to different frequencies. The beam information includes at least one of an identifier of the beam, quality of the beam, a frequency band of the beam, or base station information of the beam. For example, the identifier of the beam refers to a beam identity document (ID). For example, the quality of the beam includes at least one of measurement quality reference signal received power (RSRP), reference signal received quality (RSRQ), or received signal strength indicator (RSSI). For example, the frequency band of the beam refers to the frequency of the band where the beam is located. For example, the base station information of the beam refers to the home base station ID of the beam.

The output of the beam management model is the beam information of the output beam set. The output beam set is a second beam set acquired by restoring the beam information of the first beam set based on the beam management model, or the output beam set is a third beam set acquired by beam selection based on the beam management model.

In some embodiments, the second beam set includes at least one of different beams belonging to the same base station, different beams belonging to different base stations, different beams belonging to the same frequency, or different beams belonging to different frequencies. The beam information of the second beam set includes at least one of an identifier of the beam, quality of the beam, a frequency band of the beam, or base station information of the beam. Similarly, the third beam set includes at least one of different beams belonging to a same base station, different beams belonging to different base stations, different beams belonging to a same frequency, or different beams belonging to different frequencies. The beam information of the third beam set includes at least one of an identifier of the beam, quality of the beam, a frequency band of the beam, or base station information of the beam.

For example, in the case that the base station is a training device of the beam management model, when training the beam management model, a training sample is prepared in advance, and the training sample includes N beams and the beam information of the N beams. The beam information of a portion of the beams is extracted from the training sample as a training input of the beam management model, and the beam management model will output the predicted beam information of the N beams. An error between the beam information of the N beams and the predicted beam information of the N beams is calculated, and the beam management model is trained based on the error.

For example, in the case that the base station is a training device for the beam management model, when training the beam management model, a training sample is prepared in advance, and the training sample includes the beam information of the N beams and the identifier of an optimal beam. The beam information of the N beams in the training sample is used as a training input of the beam management model, and the beam management model will output the predicted identifier of the optimal beam. An error between the identifier of the optimal beam and the predicted identifier of the optimal beam is calculated, and the beam management model is trained based on the error.

It should be noted that the method for training the beam management model applicable to the terminal, and herein an exemplary illustration is given only and no limitation is intended to the method for training the beam management model.

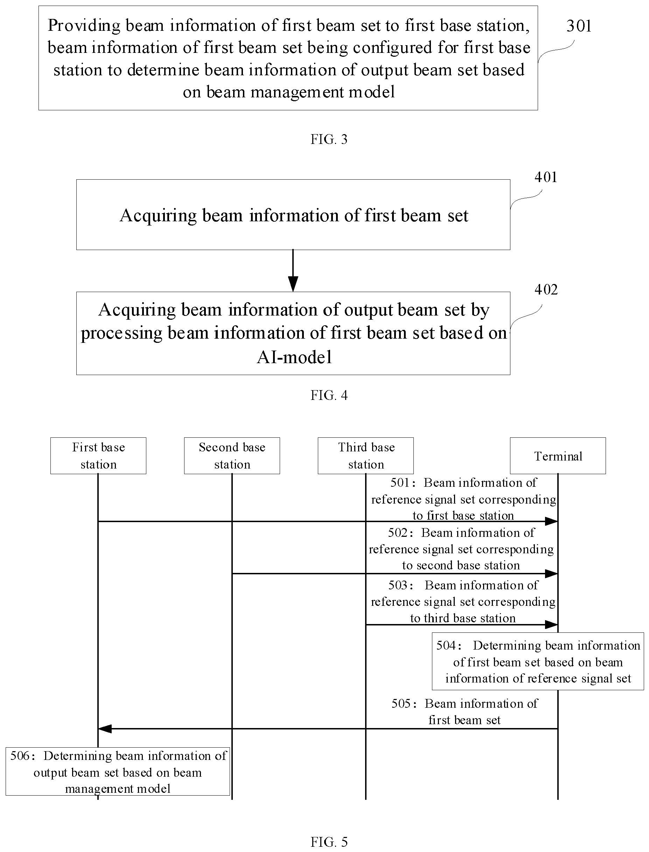

FIG. 3 shows a flowchart of an information interaction method for beam management according to some exemplary embodiments of the present disclosure. The embodiments are illustrated for use in the communication system as shown in FIG. 1. The method is applicable to the terminal 10, and the beam management model is deployed on the first base station. The method includes the following process.

**In process 301,** the beam information of the first beam set is provided to the first base station, wherein the beam information of the first beam set is configured for the first base station to determine the beam information of the output beam set based on the beam management model.

The first beam set includes at least one of different beams belonging to a same base station, different beams belonging to different base stations, different beams belonging to a same frequency, or different beams belonging to different frequencies. The beam information of the first beam set includes at least one of an identifier of the beam, quality of the beam, a frequency band of the beam, or base station information of the beam. For example, the first beam set is a beam set with different beam qualities provided by a same base station. For example, the first beam set is a beam set with different frequencies provided by different base stations.

In some embodiments, at least one base station in an interaction relationship with the terminal provides the first beam set to the terminal by at least one of broadcasting, downlink control information (DCI), a medium access control element (MAC CE), a radio resource control (RRC) message, a downlink data channel, a downlink control channel, a downlink artificial intelligence-type data transmission channel, a downlink multicast channel, or an uplink broadcast channel.

The beam management model is configured to implement beam management between the terminal and the base station. In some embodiments, the beam management model is an artificial intelligence (AI)-based beam management model or an AI-based beam management algorithm.

The output beam set is a second beam set acquired by restoring the beam information of the first beam set based on the beam management model, or the output beam set is a third beam set acquired by beam selection based on the beam management model.

In some embodiments, the second beam set includes at least one of different beams belonging to a same base station, different beams belonging to different base stations, different beams belonging to a same frequency, or different beams belonging to different frequencies. The beam information of the second beam set includes at least one of an identifier of the beam, quality of the beam, a frequency band of the beam, or base station information of the beam. Similarly, the third beam set includes at least one of different beams belonging to a same base station, different beams belonging to different base stations, different beams belonging to a same frequency, or different beams belonging to different frequencies. The beam information of the third beam set includes at least one of an identifier of the beam, quality of the beam, a frequency band of the beam, or base station information of the beam.

In some embodiments, in the case that the first beam set belongs to a plurality of base stations, the output beam set belongs to the first base station. Interaction relationship exists between a plurality of base stations and the terminal. For example, the plurality of base stations are deployed in a serving cell of the terminal, or the plurality of base stations are deployed in a candidate serving cell of the terminal.

In some embodiments, in the case that the first beam set belongs to a plurality of base stations, the output beam set belongs to the plurality of base stations.

In some embodiments, in the case that the first beam set belongs to the first base station, the output beam set belongs to the first base station.

In some embodiments, in the case that the first beam set belongs to the first base station, the output beam set belongs to a plurality of base stations.

In some embodiments, the terminal transmits the first beam set to the first base station over at least one of an uplink data channel, an uplink control channel, an uplink artificial intelligence-type data transmission channel, an uplink multicast channel, or an uplink broadcast channel.

In summary, in the embodiments, the beam information of the output beam set corresponding to the beam information of the first beam set is determined by the beam management model. The base station only needs to provide a small amount of reference signals to enable the beam management model to generate a finer beam set or a more optimal beam set. In addition, the beam management model predicts and acquires the beam information of a plurality of base stations and a plurality of frequency bands based on the generated beam set, such that the burdens of transmission and beam management are reduced.

FIG. 4 shows a flowchart of an information interaction method for beam management according to some exemplary embodiments of the present disclosure. The embodiments are illustrated by using a scenario where the information interaction method is applied to the communication system as shown in FIG. 1 as an example. The method is applicable to the terminal 10, and the beam management model is deployed on terminal 10. The method includes the following processes.

**In process 401,** beam information of a first beam set is acquired.

The first beam set includes at least one of different beams belonging to a same base station, different beams belonging to different base stations, different beams belonging to a same frequency, or different beams belonging to different frequencies. The beam information of the first beam set includes at least one of an identifier of the beam, quality of the beam, a frequency band of the beam, and base station information of the beam.

In some embodiments, the beam information of the first beam set is provided by a plurality of base stations in an interaction relationship with the terminal. Alternatively, the beam information of the first beam set is provided by one base station in an interaction relationship with the terminal.

In some embodiments, at least one base station in an interaction relationship with the terminal provides the first beam set to the terminal by at least one of broadcasting, DCI, a MAC CE, an RRC message, a downlink data channel, a downlink control channel, a downlink artificial intelligence-type data transmission channel, a downlink multicast channel, or an uplink broadcast channel.

**In process 402,** the beam information of the first beam set is processed based on the beam management model to acquire the beam information of the output beam set.

The beam management model is configured to implement beam management between the terminal and the base station. In some embodiments, the beam management model is an Al-based beam management model or an Al-based beam management algorithm.

The output beam set is a second beam set acquired by restoring the beam information of the first beam set based on the beam management model, or the output beam set is a third beam set acquired by beam selection based on the beam management model.

In some embodiments, the second beam set includes at least one of different beams belonging to a same base station, different beams belonging to different base stations, different beams belonging to a same frequency, or different beams belonging to different frequencies. The beam information of the second beam set includes at least one of an identifier of the beam, quality of the beam, a frequency band of the beam, or base station information of the beam. Similarly, the third beam set includes at least one of different beams belonging to a same base station, different beams belonging to different base stations, different beams belonging to a same frequency, or different beams belonging to different frequencies. The beam information of the third beam set includes at least one of an identifier of the beam, quality of the beam, a frequency band of the beam, or base station information of the beam.

In some embodiments, in the case that the first beam set belongs to a plurality of base stations, the output beam set belongs to the first base station. Interaction relationship exists between a plurality of base stations and the terminal. For example, the plurality of base stations as described above are deployed in a serving cell of the terminal, or the plurality of base stations are deployed in a candidate serving cell of the terminal.

In some embodiments, in the case that the first beam set belongs to a plurality of base stations, the output beam set belongs to the plurality of base stations.

In some embodiments, in the case that the first beam set belongs to the first base station, the output beam set belongs to the first base station.

In some embodiments, in the case that the first beam set belongs to the first base station, the output beam set belongs to a plurality of base stations.

In some embodiments, the terminal reports the beam information of the output beam set to a plurality of base stations in an interaction relationship with the terminal. Alternatively, the terminal reports the beam information of the output beam set to one base station in an interaction relationship with the terminal.

In some embodiments, the terminal transmits the first beam set to the first base station over at least one of an uplink data channel, an uplink control channel, an uplink artificial intelligence-type data transmission channel, an uplink multicast channel, or an uplink broadcast channel.

In summary, in the embodiments, the beam information of the output beam set corresponding to the beam information of the first beam set is determined by the beam management model. The base station only needs to provide a small amount of reference signals to enable the beam management model to generate a finer and more complete beam set or a more optimal beam set. In addition, the beam management model predicts and acquires the beam information of a plurality of base stations and a plurality of frequency bands based on the generated beam set, thereby reducing the burdens of transmission and beam management.

In the following embodiments, in the case that the beam management model is deployed on the first base station, a plurality of base stations provide reference signals to the terminal. The terminal, upon determining the beam information of the first beam set, provides the beam information of the first beam set to the first base station, such that the first base station determines the beam information of the output beam set.

FIG. 5 shows a flowchart of an information interaction method for beam management according to some exemplary embodiments of the present disclosure. The embodiments are illustrated by using a scenario where the information interaction method is applied to the communication system as shown in FIG. 1 as an example. The method is applicable to terminal 10, and the beam management model is deployed on the first base station. The method includes the following processes.

**In process 501,** the first base station transmits beam information of a reference signal set corresponding to the first base station to the terminal.

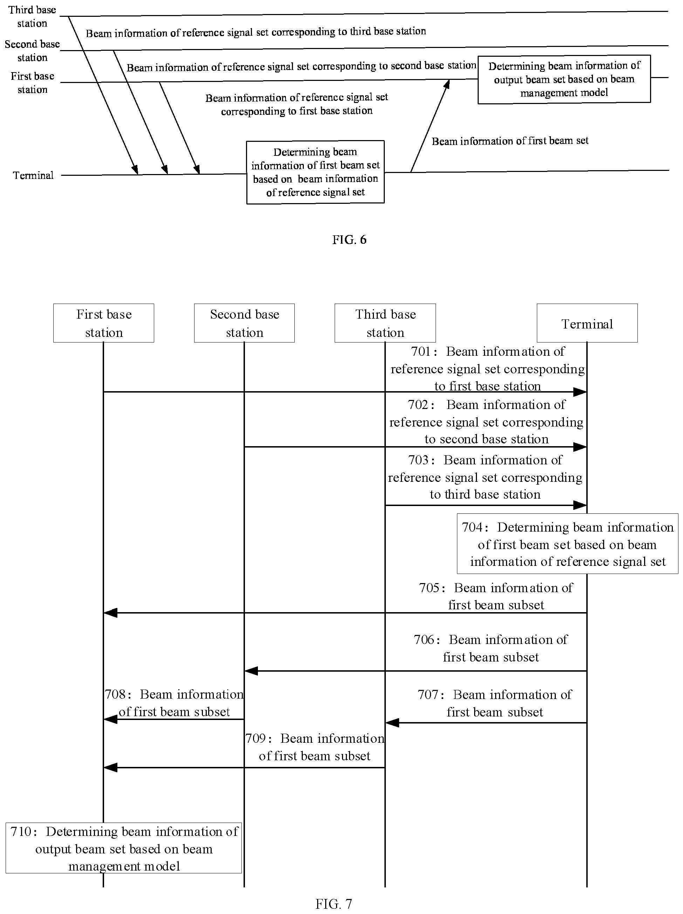

The reference signal set is configured to provide reference signals in beam management. For example, as shown in FIG. 6, the first base station transmits the beam information of the reference signal set corresponding to the first base station to the terminal, for example, the beam information of the reference signal set corresponding to the first base station includes the ID of the first base station, or the beam information of the reference signal set corresponding to the first base station includes the ID of the first base station.

For example, different base stations transmit reference signals with different frequency bands to the terminal. Reference signals in the reference signal set transmitted by the first base station to the terminal belong to a frequency band corresponding to the first base station.

In some embodiments, the first base station provides the beam information of the reference signal set to the terminal by at least one of broadcasting, DCI, a MAC CE, an RRC message, a downlink data channel, a downlink control channel, a downlink artificial intelligence-type data transmission channel, a downlink multicast channel, or an uplink broadcast channel.

**In process 502,** the second base station transmits beam information of a reference signal set corresponding to the second base station to the terminal.

For example, as shown in FIG. 6, the second base station transmits the beam information of the reference signal set corresponding to the second base station to the terminal, for example, the beam information of the reference signal set corresponding to the second base station includes the ID of the second base station, or the beam information of the reference signal set corresponding to the second base station includes the ID of the second base station.

**In process 503,** the third base station transmits beam information of a reference signal set corresponding to the third base station to the terminal.

For example, as shown in FIG. 6, the third base station transmits the beam information of the reference signal set corresponding to the third base station to the terminal, for example, the beam information of the reference signal set corresponding to the third base station includes the ID of the third base station, or the beam information of the reference signal set corresponding to the first base station includes the ID of the third base station. The first base station, the second base station, and the third base station are deployed in a serving cell of the terminal, or are deployed in a candidate serving cell of the terminal.

**In process 504,** the terminal determines beam information of a first beam set based on the beam information of the reference signal set.

For example, the terminal performs beam measurement on each reference signal in the reference signal set to generate the beam information of the first beam set.

In some embodiments, the beam information of the first beam set includes at least one of an identifier of the beam, quality of the beam, a frequency band of the beam, or base station information of the beam.

In some embodiments, at least one of the first base station, the second base station, and the third base station provides one group of beam sets to the terminal; and the terminal acquires the group of beam sets configured by the base station; and the first beam set is determined based on the group of beam sets. In some embodiments, the terminal takes the group of beam sets as the first beam set.

In some embodiments, the terminal takes a subset of the group of beam sets as the first beam set. For example, the base station provides X (X is a positive integer greater than 2) beams to the base station, and the UE reports Y beams of the X beams, wherein the Y beams satisfies a condition with respect to the quality of the beams, for example, only beam quality is better than a given threshold for reporting. The condition and threshold described above are configured to the terminal by the base station, or agreed by 3^{rd} Generation Partnership Project (3GPP) protocols.

In some embodiments, the terminal takes a beam set satisfying a requirement in the group of beam sets as the first beam set. For example, the requirement is a condition with respect to the quality of the beams, for example, only reporting beams with beam quality better than a given threshold. The condition and threshold described above are configured to the terminal by the base station, or agreed by 3GPP protocol.

**In process 505,** the terminal transmits the beam information of the first beam set to the first base station.

In some embodiments, the terminal transmits the beam information of the first beam set to the first base station by at least one of broadcasting, DCI, a MAC CE, an RRC message, a downlink data channel, a downlink control channel, a downlink artificial intelligence-type data transmission channel, a downlink multicast channel, or an uplink broadcast channel.

**In process 506,** the first base station determines the beam information of the output beam set based on the beam management model.

The beam management model is configured to implement beam management between the terminal and the base station. In some embodiments, the beam management model is an Al-based beam management model or an Al-based beam management algorithm.

The output beam set is a second beam set acquired by restoring the beam information of the first beam set based on the beam management model, or the output beam set is a third beam set acquired by beam selection based on the beam management model.

In some embodiments, the second beam set includes at least one of different beams belonging to a same base station, different beams belonging to different base stations, different beams belonging to a same frequency, or different beams belonging to different frequencies. The beam information of the second beam set includes at least one of an identifier of the beam, quality of the beam, a frequency band of the beam, or base station information of the beam. Similarly, the third beam set includes at least one of different beams belonging to a same base station, different beams belonging to different base stations, different beams belonging to a same frequency, or different beams belonging to different frequencies. The beam information of the third beam set includes at least one of an identifier of the beam, quality of the beam, a frequency band of the beam, or base station information of the beam.

For example, in the case that 1024 beams are used to perform a complete beam scanning, design, transmission, and detection of 1024 groups of reference signals are required. In the embodiments of the present disclosure, taking a reference signal set transmitted by the first base station as an example, the first base station transmits only 512 groups of reference signals to the terminal. The terminal determines the first beam set including 512 beams based on the reference signal transmitted by the first base station, and provides the beam information of the first beam set to the first base station. The first base station restores the beam information of the first beam set based on the beam management model to acquire the output beam set including 1024 beams.

In summary, in the embodiments, a plurality of base stations provide reference signals to the terminal, and the first base station determines the beam information of the output beam set. As it is not required that the beam management model provides the reference signal of each beam in all beams, the plurality of base stations are not required to provide a complete reference signal for the terminal, thereby reducing the burdens of transmission and beam management.

In the following embodiments, in the case that the beam management model is deployed on the first base station, a plurality of base stations provide reference signals to the terminal. The terminal, upon determining the beam information of the first beam set, provides the beam information of the first beam subset to the plurality of base stations, and each base station forwards the beam information of the first beam subset to the first base station, such that the first base station determines the beam information of the output beam set.

FIG. 7 shows a flowchart of an information interaction method for beam management according to some exemplary embodiments of the present disclosure. The embodiments are illustrated by using a scenario where the information interaction method is applied to the communication system as shown in FIG. 1 as an example. The method is applicable to terminal 10, and the beam management model is deployed on the first base station. The method includes the following processes.

**In process 701,** the first base station transmits beam information of a reference signal set corresponding to the first base station to the terminal.

**In process 702,** the second base station transmits beam information of a reference signal set corresponding to the second base station to the terminal.

**In process 703,** the third base station transmits beam information of a reference signal set corresponding to the third base station to the terminal.

**In process 704,** the terminal determines beam information of a first beam set based on the beam information of the reference signal set.

For details, reference may be made to process 504 in the embodiments shown in FIG. 5, which are not reiterated herein. The first base station, the second base station, and the third base station are deployed in a serving cell of the terminal, or are deployed in a candidate serving cell of the terminal.

**In process 705,** the terminal transmits beam information of a first beam subset to the first base station.

The first beam subset is a subset of the first beam set. In some embodiments, the terminal transmits the beam information of the first beam subset belonging to the first base station to the first base station. For example, the first beam set includes the beam information belonging to the first base station, the beam information belonging to the second base station, and the beam information belonging to the third base station, and beam information belonging to different base stations corresponds to different first beam subsets. The terminal transmits the beam information belonging to the first base station, but does not transmit the beam information belonging to the second base station or the beam information belonging to the third base station.

In some embodiments, the terminal transmits all beam information of the first beam set to the first base station, or transmits a portion of the beam information of the first beam set to the first base station.

**In process 706,** the terminal transmits the beam information of the first beam subset to the second base station.

In some embodiments, the terminal transmits all beam information of the first beam set to the second base station, or transmits a portion of the beam information of the first beam set to the second base station.

In some embodiments, the terminal transmits the beam information of the first beam subset belonging to the second base station to the second base station.

**In process 707,** the terminal transmits the beam information of the first beam subset to the third base station.

The terminal transmits all beam information of the first beam set to the third base station, or transmits a portion of the beam information of the first beam set to the third base station.

In some embodiments, the terminal transmits the beam information of the first beam subset belonging to the third base station to the third base station.

**In process 708,** the second base station forwards the beam information of the first beam subset to the first base station.

In some embodiments, in the case that the terminal transmits the beam information of all the first beam sets to the second base station, the second base station forwards the beam information of the first beam subset belonging to the second base station to the first base station. For example, the beam information of the first beam set includes the beam information belonging to the first base station, the beam information belonging to the second base station, and the beam information belonging to the third base station, and the second base station provides only the beam information belonging to the second base station to the first base station.

In some embodiments, the beam information is transmitted among the base stations over at least one of an inter-base station interface, an inter-base station artificial intelligence-type data transmission channel, an inter-base station multicast channel, or a broadcast channel. For example, the inter-base station interface refers to an Xn interface (network interface between NG-RAN nodes).

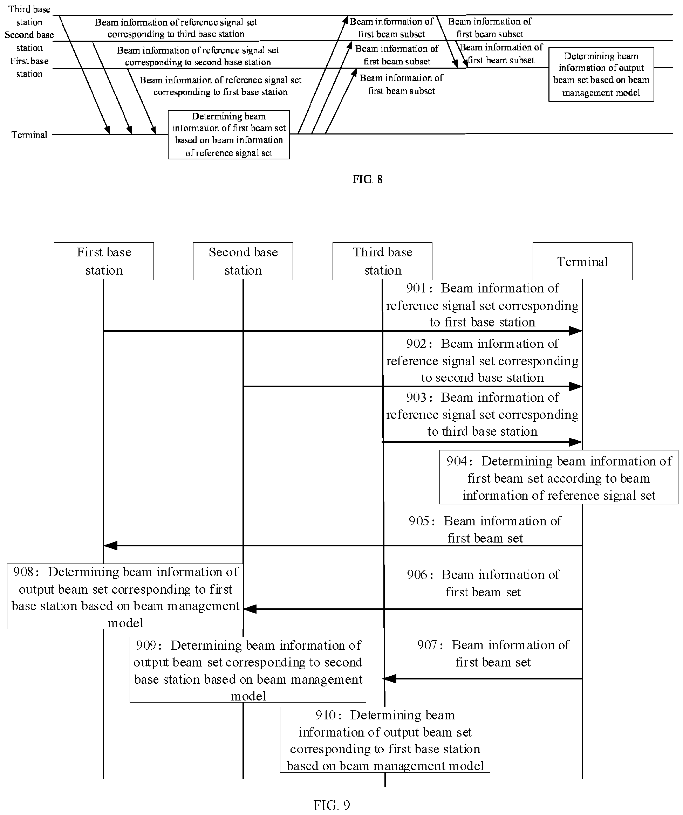

For example, as shown in FIG. 8, the second base station forwards the beam information of the first beam subset to the first base station.

**In process 709,** the third base station forwards the beam information of the first beam subset to the first base station.

In some embodiments, in the case that the terminal transmits the beam information of all the first beam sets to the third base station, the third base station forwards the beam information of the first beam subset belonging to the third base station to the first base station.

In some embodiments, the beam information is transmitted among the base stations over at least one of an inter-base station interface, an inter-base station artificial intelligence-type data transmission channel, an inter-base station multicast channel, or a broadcast channel.

**In process 710,** the first base station determines beam information of an output beam set based on the beam management model.

For details, refenrece is made to process 506 in the embodiments shown in FIG. 5, which are not reiterated herein.

In summary, in the embodiments, a plurality of base stations provide reference signals to the terminal, and the terminal provides the beam information of the first beam subset to the plurality of base stations separately. Then, the plurality of base stations forward the beam information of the first beam subset to the first base station, and the first base station determines the beam information of the output beam set. As it is not required that the beam management model provides the reference signal of each beam in all beams, the plurality of base stations are not required to provide a complete reference signal for the terminal, thereby reducing the burdens of transmission and beam management.

In the following embodiments, in the case that the beam management model is deployed on a plurality of base stations, the plurality of base stations provide reference signals to the terminal. The terminal, upon determining the beam information of the first beam set, provides the beam information of the first beam set to the plurality of base stations, separately, such that the plurality of base stations determine the beam information of their respective output beam set.

FIG. 9 shows a flowchart of an information interaction method for implementing beam management according to some exemplary embodiments of the present disclosure. The embodiments are illustrated by using a scenario where the information interaction method is applied to the communication system as shown in FIG. 1 as an example. The method is applicable to terminal 10, and the beam management model is deployed on a plurality of base stations. The method includes the following processes.

**In process 901,** the first base station transmits beam information of a reference signal set corresponding to the first base station to the terminal.

**In process 902,** the second base station transmits beam information of a reference signal set corresponding to the second base station to the terminal.

**In process 903,** the third base station transmits beam information of a reference signal set corresponding to the third base station to the terminal.

**In process 904,** the terminal determines beam information of a first beam set based on the beam information of the reference signal set.

For details, reference may be made to process 504 in the embodiments shown in FIG. 5, which are not reiterated herein.

**In process 905,** the terminal transmits the beam information of the first beam set to the first base station.

In some embodiments, the terminal transmits all beam information of the first beam set to the first base station, or transmits a portion of the beam information of the first beam set to the first base station.

In some embodiments, the terminal transmits the beam information belonging to the first base station in the first beam set to the first base station.

**In process 906,** the terminal transmits the beam information of the first beam set to the second base station.

In some embodiments, the terminal transmits all beam information of the first beam set to the second base station, or transmits a portion of the beam information of the first beam set to the second base station.

In some embodiments, the terminal transmits the beam information belonging to the second base station in the first beam set to the second base station.

**In process 907,** the terminal transmits the beam information of the first beam set to the third base station.

In some embodiments, the terminal transmits all beam information of the first beam set to the third base station, or transmits a portion of the beam information of the first beam set to the third base station.

In some embodiments, the terminal transmits the beam information belonging to the third base station in the first beam set to the third base station.

The beam information transmitted by the terminal to the first base station, the second base station, and the third base station is the same or different. For example, the terminal transmits all beam information of the first beam set to the first base station and the second base station, and transmits the beam information belonging to the third base station to the third base station.

**In process 908,** the first base station determines beam information of an output beam set corresponding to the first base station based on the beam management model.

In some embodiments, the first base station further determines beam information of an output beam set corresponding to the second base station and/or the third base station based on the beam management model. For example, the first base station receives all beam information of the first beam set. In some embodiments, after acquiring the beam information of the output beam set corresponding to the second base station and/or the third base station, the first base station transmits the beam information of the output beam set to the second base station and/or the third base station.

In some embodiments, the first base station provides the beam information of the output beam set corresponding to the first base station to other base stations.

In some embodiments, the beam information is transmitted among the base stations over at least one of an inter-base station interface, an inter-base station artificial intelligence-type data transmission channel, an inter-base station multicast channel, or a broadcast channel.

**In process 909,** the second base station determines beam information of an output beam set corresponding to the second base station based on the beam management model.

In some embodiments, the second base station further determines the beam information of the output beam set corresponding to the first base station and/or the third base station based on the beam management model. In some embodiments, the second base station transmits the beam information of the output beam set to the first base station and/or the third base station.

In some embodiments, the second base station provides the beam information of the output beam set corresponding to the second base station to other base stations.

**In process 910,** the third base station determines beam information of an output beam set corresponding to the third base station based on the beam management model.

In some embodiments, the third base station further determines the beam information of the output beam set corresponding to the first base station and/or the second base station based on the beam management model. In some embodiments, the third base station transmits the beam information of the output beam set to the first base station and/or the second base station.

In some embodiments, the third base station provides the beam information of the output beam set corresponding to the third base station to other base stations.

In summary, in the embodiments, a plurality of base stations provide reference signals to the terminal, and the terminal provides the beam information of the first beam set to the plurality of base stations, separately. The plurality of base stations determine the beam information of their respective output beam sets. As it is not required that the beam management model provides the reference signal of each beam in all beams, the plurality of base stations are not required to provide a complete reference signal for the terminal, thereby reducing the burdens of transmission and beam management.

In the following embodiments, in the case that the beam management model is deployed on the terminal, a plurality of base stations provide reference signals to the terminal. The terminal, upon determining beam information of a first beam set and generating beam information of an output beam set, provides the beam information of the output beam set to the first base station.

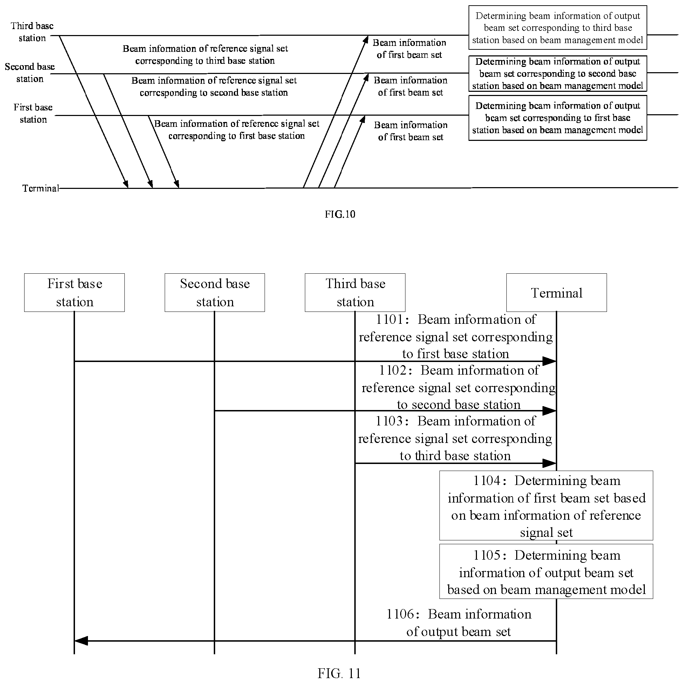

FIG. 11 shows a flowchart of an information interaction method for beam management according to some exemplary embodiments of the present disclosure. The embodiments are illustrated by using a scenario where the information interaction method is applied to the communication system as shown in FIG. 1 as an example. The method is applicable to terminal 10, and the beam management model is deployed on the terminal. The method includes the following processes.

**In process 1101,** the first base station transmits beam information of a reference signal set corresponding to the first base station to the terminal.

**In process 1102,** the second base station transmits beam information of a reference signal set corresponding to the second base station to the terminal.

**In process 1103,** the third base station transmits beam information of a reference signal set corresponding to the third base station to the terminal.

**In process 1104,** the terminal determines beam information of a first beam set based on the beam information of the reference signal set.

For details, reference may be made to process 504 in the embodiments shown in FIG. 5, which are not reiterated herein.

**In process 1105,** the terminal determines beam information of an output beam set based on the beam management model.

The beam management model is configured to implement beam management between the terminal and the base station. In some embodiments, the beam management model is an Al-based beam management model or an Al-based beam management algorithm.

The output beam set is a second beam set acquired by restoring the beam information of the first beam set based on the beam management model, or the output beam set is a third beam set acquired by beam selection based on the beam management model.

In some embodiments, the second beam set includes at least one of different beams belonging to a same base station, different beams belonging to different base stations, different beams belonging to a same frequency, or different beams belonging to different frequencies. The beam information of the second beam set includes at least one of an identifier of the beam, quality of the beam, a frequency band of the beam, or base station information of the beam. Similarly, the third beam set includes at least one of different beams belonging to a same base station, different beams belonging to different base stations, different beams belonging to a same frequency, or different beams belonging to different frequencies. The beam information of the third beam set includes at least one of an identifier of the beam, quality of the beam, a frequency band of the beam, or base station information of the beam.

The beam information of the output beam set includes at least one of an identifier of the beam, quality of the beam, a frequency band of the beam, or base station information of the beam.

It should be noted that the beam information of the output beam set acquired in this process belongs to the first base station.

**In process 1106,** the terminal reports the beam information of the output beam set to the first base station.

In some embodiments, the terminal reports all beam information of the output beam set to the first base station, or reports a portion of the beam information of the output beam set to the first base station.

In some embodiments, the terminal reports the beam information the output beam set belonging to the first base station to the first base station. For example, the output beam set acquired by the terminal includes the beam information belonging to the first base station, the beam information belonging to the second base station, and the beam information belonging to the third base station, and the terminal only reports the beam information belonging to the first base station, but does not report the beam information belonging to the second base station or the beam information belonging to the third base station to the first base station.

In summary, in the embodiments, a plurality of base stations provide reference signals to the terminal, and the terminal determines the beam information of the output beam set and reports the beam information of the output beam set to the first base station. As it is not required that the beam management model provides the reference signal of each beam in all beams, the plurality of base stations are not required to provide a complete reference signal for the terminal, thereby reducing the burdens of transmission and beam management.

In the following embodiments, in the case that the beam management model is deployed on the terminal, a plurality of base stations provide reference signals to the terminal. The terminal, upon determining the beam information of the first beam set and generating the beam information of the output beam set, provides the beam information of the output beam set to the plurality of base stations.

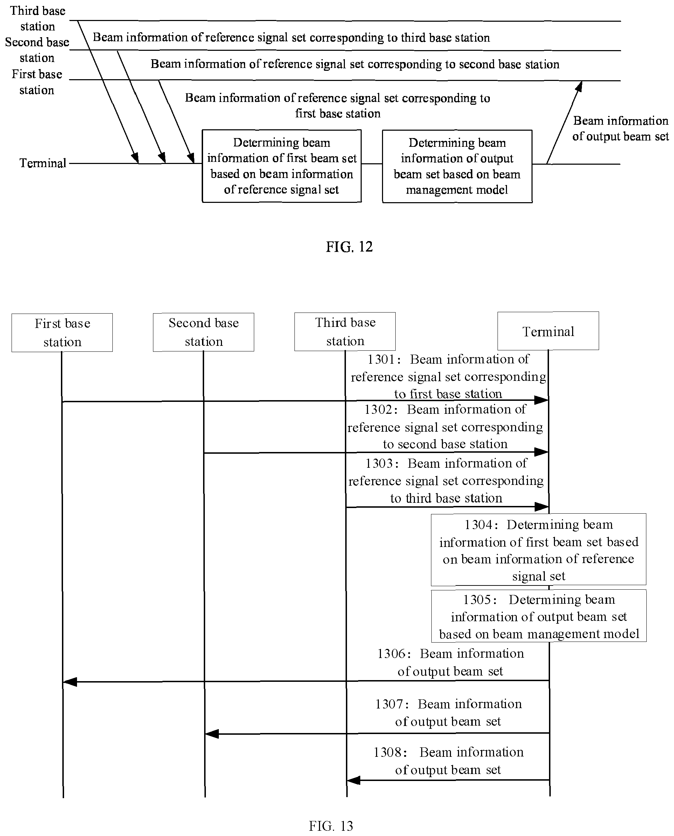

FIG. 13 shows a flowchart of an information interaction method for beam management according to some exemplary embodiments of the present disclosure. The embodiments are illustrated by using a scenario where the information interaction method is applied to the communication system as shown in FIG. 1 as an example. The method is applicable to terminal 10, and the beam management model is deployed on the terminal. The method includes the following processes.

**In process 1301,** the first base station transmits beam information of a reference signal set corresponding to the first base station to the terminal.

**In process 1302,** the second base station transmits beam information of a reference signal set corresponding to the second base station to the terminal.

**In process 1303,** the third base station transmits beam information of a reference signal set corresponding to the third base station to the terminal.

**In process 1304,** the terminal determines beam information of a first beam set based on the beam information of the reference signal set.

For details, reference may be made to process 504 in the embodiments shown in FIG. 5, which are not reiterated herein.

**In process 1305,** the terminal determines beam information of an output beam set based on the beam management model.

For details, reference may made to process 1105 in the embodiments shown in FIG. 11, which are not reiterated herein.

It should be noted that the beam information of the output beam set acquired in this process belongs to the first base station, the second base station, and the third base station.

**In process 1306,** the terminal reports the beam information of the output beam set to the first base station.

In some embodiments, the terminal reports all beam information of the output beam set to the first base station, or reports a portion of the beam information of the output beam set to the first base station.

In some embodiments, the terminal reports the beam information the output beam set belonging to the first base station to the first base station. For example, the output beam set acquired by the terminal includes the beam information belonging to the first base station, the beam information belonging to the second base station, and the beam information belonging to the third base station, and the terminal only reports the beam information belonging to the first base station, but does not report the beam information belonging to the second base station or the beam information belonging to the third base station to the first base station.

**In process 1307,** the terminal reports the beam information of the output beam set to the second base station.

In some embodiments, the terminal reports all beam information of the output beam set to the second base station, or reports a portion of the beam information of the output beam set to the second base station.

In some embodiments, the terminal reports the beam information of the output beam set belonging to the second base station to the second base station.

**In process 1308,** the terminal reports the beam information of the output beam set to the third base station.

In some embodiments, the terminal reports all beam information of the output beam set to the third base station, or reports a portion of the beam information of the output beam set to the third base station.

In some embodiments, the terminal reports the beam information of the output beam set belonging to the third base station to the third base station.

In summary, in the embodiments, a plurality of base stations provide reference signals to the terminal, and the terminal determines the beam information of the output beam set and reports the beam information of the output beam set to the plurality of base stations. As it is not required that the beam management model provides the reference signal of each beam in all beams, the plurality of base stations are not required to provide a complete reference signal for the terminal, thereby reducing the burdens of transmission and beam management.

In the following embodiments, in the case that the beam management model is deployed on the terminal, the first base stations provide reference signals to the terminal. The terminal, upon determining the beam information of the first beam set and generating the beam information of the output beam set, provides the beam information of the output beam set to the first base station.

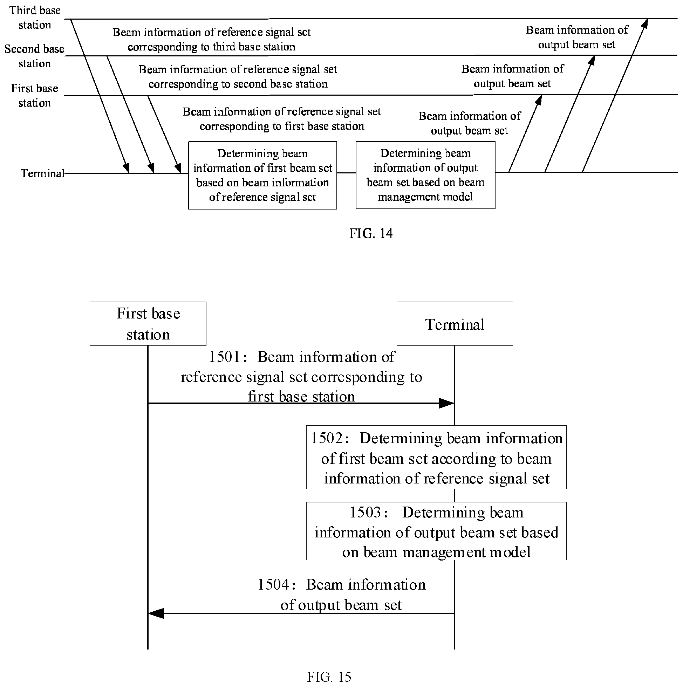

FIG. 15 shows a flowchart of an information interaction method for beam management according to some exemplary embodiments of the present disclosure. The embodiments are illustrated by using a scenario where the information interaction method is applied to the communication system as shown in FIG. 1 as an example. The method is applicable to terminal 10, and the beam management model is deployed on the terminal. The method includes the following processes.

**In process 1501,** the first base station transmits beam information of a reference signal set corresponding to the first base station to the terminal.

**In process 1502,** the terminal determines beam information of a first beam set based on the beam information of the reference signal set.

For details, reference may be made to process 504 in the embodiments shown in FIG. 5, which are not reiterated herein.

**In process 1503,** the terminal determines beam information of an output beam set based on the beam management model.

For details, reference may be made to process 1105 in the embodiments shown in FIG. 11, which are not reiterated herein.

It should be noted that the beam information of the output beam set acquired in this process belongs to the first base station.

**In process 1504,** the terminal reports the beam information of the output beam set to the first base station.

In summary, in the embodiments, a plurality of base stations provide reference signals to the terminal, and the terminal determines the beam information of the output beam set and reports the beam information of the output beam set to the first base station. As it is not required that the beam management model provides the reference signal of each beam in all beams, the plurality of base stations are not required to provide a complete reference signal for the terminal, thereby reducing the burdens of transmission and beam management.

In the following embodiments, in the case that the beam management model is deployed on the terminal, the first base station provides reference signals to the terminal. The terminal, upon determining the beam information of the first beam set and generating the beam information of the output beam set, provides the beam information of the output beam set to a plurality of base stations.

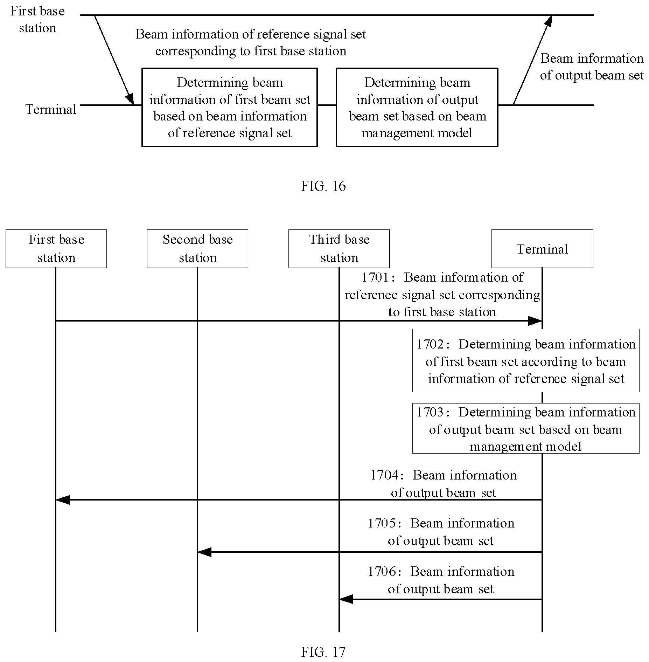

FIG. 17 shows a flowchart of an information interaction method for beam management according to some exemplary embodiments of the present disclosure. The embodiments are illustrated by using a scenario where the information interaction method is applied to communication system as shown in FIG. 1 as an example. The method is applicable to terminal 10, and the beam management model is deployed on the terminal. The method includes the following processes.

**In process 1701,** the first base station transmits beam information of a reference signal set corresponding to the first base station to the terminal.

**In process 1702,** the terminal determines beam information of a first beam set based on the beam information of the reference signal set.

For details, reference may be made to process 504 in the embodiments shown in FIG. 5, which are not reiterated herein.

**In process 1703,** the terminal determines beam information of an output beam set based on the beam management model.

For details, reference may be made to process 1105 in the embodiments shown in FIG. 11, which are not reiterated herein.

It should be noted that the beam information of the output beam set acquired in this process belongs to the first base station, the second base station, and the third base station.

**In process 1704,** the terminal reports the beam information of the output beam set to the first base station.

In some embodiments, the terminal reports all beam information of the output beam set to the first base station, or reports a portion of the beam information of the output beam set to the first base station.

In some embodiments, the terminal reports the beam information of the output beam set belonging to the first base station to the first base station. For example, the beams in the output beam set include an ID of the home base station, and the terminal reports the beam information of the output beam set to the first base station based on the ID of the home base station.

**In process 1705,** the terminal reports the beam information of the output beam set to the second base station.

In some embodiments, the terminal reports all beam information of the output beam set to the second base station, or reports a portion of the beam information of the output beam set to the second base station.

In some embodiments, the terminal reports the beam information of the output beam set belonging to the second base station to the second base station.

**In process 1706,** the terminal reports the beam information of the output beam set to the third base station.

In some embodiments, the terminal reports all beam information of the output beam set to the third base station, or reports a portion of the beam information of the output beam set to the third base station. In some embodiments, the terminal reports the beam information of the output beam set belonging to the third base station to the third base station.

In summary, in the embodiments, the first base station provides reference signals to the terminal, and the terminal determines the beam information of the output beam set and reports the beam information of the output beam set to a plurality of base stations. As it is not required that the beam management model provides the reference signal of each beam in all beams, the plurality of base stations are not required to provide a complete reference signal for the terminal, thereby reducing the burdens of transmission and beam management.

In the following embodiments, the base station configures measurement configuration information and/or reporting configuration information to the terminal in advance, such that the terminal determines the first beam information.

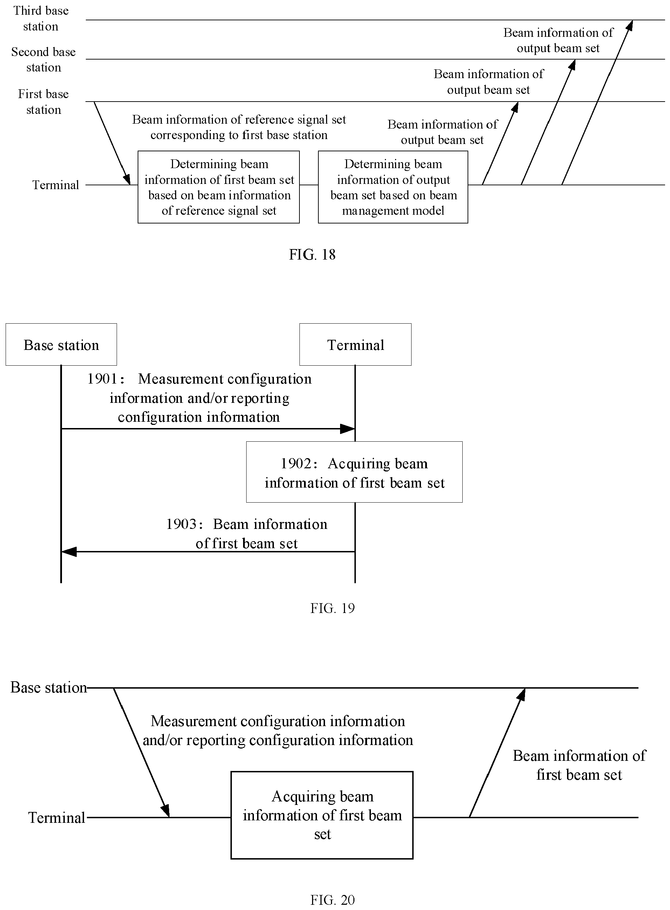

FIG. 19 shows a flowchart of an information interaction method for beam management according to some exemplary embodiments of the present disclosure. The embodiments are illustrated by using a scenario where the information interaction method is applied to the communication system as shown in FIG. 1 as an example. The method includes the following processes.

**In process 1901,** the base station pre-configures measurement configuration information and/or reporting configuration information to the terminal.

The base station in the embodiments refers to at least one base station in an interaction relationship with the terminal. For example, the base station is deployed in a serving cell of the terminal or deployed in a candidate serving cell of the terminal.

The base station pre-configures the measurement configuration information and/or reporting configuration information to the terminal by at least one of broadcasting, DCI, a MAC CE, an RRC message, a downlink data channel, a downlink control channel, or a downlink artificial intelligence-type data transmission channel, or a downlink multicast channel, or an uplink broadcast channel.

The pre-configuration content includes at least one of identification information of a beam, a reference signal corresponding to a beam, measurement configuration corresponding to beam measurement, quality information to be measured of a beam, frequency band information of a beam, base station information of a beam, or a manner of reporting the first beam set. For example, the identification information of the beam refers to a beam ID. For example, the reference signals corresponding to the beams are CSI-RS, DMRS, and the like. For example, the measurement configuration corresponding to the beam measurement includes, but is not limited to, at least one of a pattern of reference signals, a period of measurement, a time position, a time window, a frequency domain position, and the like. For example, the quality information to be measured of the beam includes, but is not limited to, at least one of RSRP, RSRQ, or RSSI. For example, the frequency band information of the beam refers to the frequency of the band where the beam is located. For example, the base station information of the beam refers to the home ID of the beam. For example, the method for reporting the first beam set includes, but is not limited to, at least one of a reporting period, a reporting time, and a coding mode for reporting the information described above.

For example, as shown in FIG. 20, the base station pre-configures the measurement configuration information and/or reporting configuration information to the terminal.

**In process 1902,** the terminal acquires the beam information of the first beam set.

The first beam set includes at least one of different beams belonging to a same base station, different beams belonging to different base stations, different beams belonging to a same frequency, or different beams belonging to different frequencies. The beam information of the first beam set includes at least one of an identifier of the beam, quality of the beam, a frequency band of the beam, or base station information of the beam.

In some embodiments, the beam information of the first beam set is provided by a plurality of base stations in an interaction relationship with the terminal. Alternatively, the beam information of the first beam set is provided by one base station in an interaction relationship with the terminal.

In some embodiments, at least one base station in an interaction relationship with the terminal provides the first beam set to the terminal by at least one of broadcasting, DCI, a MAC CE, an RRC message, a downlink data channel, a downlink control channel, a downlink artificial intelligence-type data transmission channel, a downlink multicast channel, or an uplink broadcast channel.

**In process 1903,** the terminal reports the beam information of the first beam set to the base station.

In summary, in the embodiments, the base station pre-configures the measurement configuration information and/or reporting configuration information to the terminal. In this way, the terminal determines the beam information of the first beam set in time to perform the information interaction for the beam management.

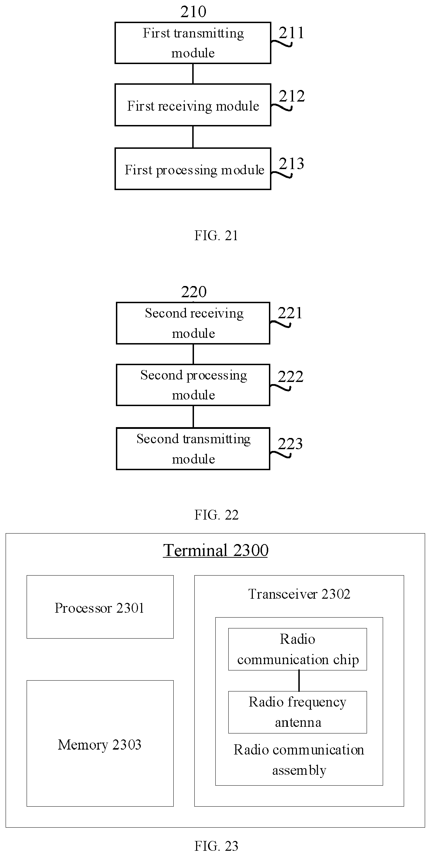

FIG. 21 shows a block diagram of an information interaction apparatus for beam management according to some exemplary embodiments of the present disclosure. The apparatus 210 includes:
a first transmitting module 211, configured to provide beam information of a first beam set to a first base station, wherein the beam information of the first beam set is configured for the first base station to determine beam information of an output beam set based on a beam management model.

In some embodiments, the output beam set includes at least one of: a second beam set acquired by restoring the beam information based on the beam management model, or a third beam set acquired by beam selection based on the beam management model.

In some embodiments, the first beam set, the second beam set, and the third beam set each include at least one of: different beams belonging to a same base station, different beams belonging to different base stations, different beams belonging to a same frequency, or different beams belonging to different frequencies.

In some embodiments, the beam information includes at least one of an identifier of the beam, quality of the beam, a frequency band of the beam, or base station information of the beam.

In some embodiments, the output beam set belongs to the first base station in the case that the first beam set belongs to a plurality of base stations; or the output beam set belongs to a plurality of base stations in the case that the first beam set belongs to the plurality of base stations; or the output beam set belongs to the first base station in the case that the first beam set belongs to the first base station; or the output beam set belongs to a plurality of base stations in the case that the first beam set belongs to the first base station.

In some embodiments, the first transmitting module 211 is further configured to transmit the beam information of the first beam set to the first base station.

In some embodiments, the first transmitting module 211 is further configured to transmit the beam information of a first beam subset to a plurality of base stations in an interaction relationship with the terminal, wherein in the plurality of base stations, base stations other than the first base station are configured to forward the beam information of the first beam subset to the first base station, and the first beam subset is a subset of the first beam set.

In some embodiments, the first transmitting module 211 is further configured to transmit the beam information of the first beam subset corresponding to each of the plurality of base stations to the base station.

In some embodiments, the beam information is transmitted among the base stations over at least one of an inter-base station interface, an inter-base station artificial intelligence-type data transmission channel, an inter-base station multicast channel, or a broadcast channel.

In some embodiments, the first transmitting module 211 is further configured to transmit the beam information of the first beam set to a plurality of base stations in an interaction relationship with the terminal, and the first beam set is configured for the plurality of base stations to determine the beam information of the output beam set corresponding to each base station.

In some embodiments, a first receiving module 212 is configured to receive the beam information of a reference signal set provided by at least one base station in an interaction relationship with the terminal; and
a first processing module 213 is configured to determine the first beam set based on the beam information of the reference signal set.

In some embodiments, the first receiving module 212 is configured to acquire one group of beam sets configured by at least one base station in an interaction relationship with the terminal; and

the first processing module 213 is configured to determine the first beam set based on the group of beam sets.

In some embodiments, the first processing module 213 is further configured to take the group of beam sets as the first beam set; or the first processing module 213 is further configured to take a subset of the group of beam sets as the first beam set; or the first processing module 213 is further configured to take a beam set satisfying a requirement in the group of beam sets as the first beam set.

In some embodiments, the first receiving module 212 is configured to receive measurement configuration information pre-configured by at least one base station in an interaction relationship with the terminal.

In some embodiments, the first receiving module 212 is configured to receive reporting configuration information pre-configured by at least one base station in an interaction relationship with the terminal.

In some embodiments, the measurement configuration information is pre-configured by at least one of broadcasting, DCI, a MAC CE, a RRC message, a downlink data channel, a downlink control channel, a downlink artificial intelligence-type data transmission channel, a downlink multicast channel, or an uplink broadcast channel.

In some embodiments, pre-configuration content includes at least one of identification information of a beam, a reference signal corresponding to a beam, measurement configuration corresponding to beam measurement, quality information to be measured of a beam, frequency band information of a beam, base station information of a beam, or a manner of reporting the first beam set.

In some embodiments, the terminal transmits the first beam set over at least one of an uplink data channel, an uplink control channel, an uplink artificial intelligence-type data transmission channel, an uplink multicast channel, or an uplink broadcast channel.

In some embodiments, the beam management model is an artificial intelligence (AI)-based beam management model or an AI-based beam management algorithm.

FIG. 22 shows a block diagram of an information interaction apparatus for beam management according to some exemplary embodiments of the present disclosure. The apparatus 220 includes:
a second receiving module 221, configured to acquire the beam information of the first beam set; and
a second processing module 222, configured to process the beam information of the first beam set based on the beam management model to acquire beam information of the output beam set.

In some embodiments, the output beam set includes at least one of: a second beam set acquired by restoring the beam information based on the beam management model; or a third beam set acquired by beam selection based on the beam management model.

In some embodiments, the first beam set, the second beam set, and the third beam set each include at least one of: different beams belonging to a same base station, different beams belonging to different base stations, different beams belonging to a same frequency, or different beams belonging to different frequencies.

In some embodiments, the beam information includes at least one of an identifier of the beam, quality of the beam, a frequency band of the beam, or base station information of the beam.

In some embodiments, the second receiving module 221 is further configured to receive the beam information of a reference signal set provided by a plurality of base stations in an interaction relationship with the terminal, and determine the beam information of the first beam set based on the reference signal set.

In some embodiments, the beam information of the output beam set belongs to the first base station of the plurality of base stations; and a second transmitting module 223 is configured to report the beam information of the output beam set to the first base station.

In some embodiments, the beam information of the output beam set belongs to the plurality of base stations; and the second transmitting module 223 is configured to report the beam information of the output beam set to the plurality of base stations.

In some embodiments, the second receiving module 221 is further configured to receive the beam information of a reference signal set provided by the first base station in an interaction relationship with the terminal, and determine the beam information of the first beam set based on the reference signal set.

In some embodiments, the beam information of the output beam set belongs to the first base station; and a second transmitting module 223 is configured to report the beam information of the output beam set to the first base station.

In some embodiments, the beam information of the output beam set belongs to a plurality of base stations in an interaction relationship with the terminal; and a second transmitting module 223 is configured to report the beam information of the output beam set to the plurality of base stations.

In some embodiments, the second receiving module 221 is further configured to acquire one group of beam sets configured by at least one base station in an interaction relationship with the terminal; and
the second processing module 222 is further configured to determine the first beam set based on the group of beam sets.

In some embodiments, the second processing module 222 is further configured to take the group of beam sets as the first beam set; or the second processing module 222 is further configured to take a subset of the group of beam sets as the first beam set; or the second processing module 222 is further configured to take a beam set satisfying a requirement in the group of beam sets as the first beam set.

In some embodiments, the second receiving module 221 is further configured to receive measurement configuration information pre-configured by at least one base station in an interaction relationship with the terminal.

In some embodiments, the second receiving module 221 is further configured to receive reporting configuration information pre-configured by at least one base station in an interaction relationship with the terminal.

In some embodiments, the pre-configuration method is implemented by at least one of broadcasting, DCI, a MAC CE, an RRC message, a downlink data channel, a downlink control channel, a downlink artificial intelligence-type data transmission channel, a downlink multicast channel, or an uplink broadcast channel.

In some embodiments, pre-configuration content includes at least one of identification information of a beam, a reference signal corresponding to a beam, measurement configuration corresponding to beam measurement, quality information to be measured of a beam, frequency band information of a beam, base station information of a beam, or a manner of reporting the first beam set.

In some embodiments, the terminal transmits the first beam set over at least one of an uplink data channel, an uplink control channel, an uplink artificial intelligence-type data transmission channel, an uplink multicast channel, or an uplink broadcast channel.

In an optional design of the present disclosure, the beam management model is an AI-based beam management model or an AI-based beam management algorithm.

It should be noted that, in the case that the apparatus according to the above embodiments implements the functions thereof, the division of the functional modules is merely exemplary. In practical application, the above functions may be assigned to different functional modules according to actual needs, i.e., the internal structure of the device may be divided into different functional modules, so as to implement all or a part of the above functions.

With regard to the apparatus in the above embodiments, the specific manner in which each module performs the operation has been described in detail in the embodiments related to the method and will not be described in detail herein.

Referring to FIG. 23, a schematic structural diagram of terminal 2300 according to some embodiments of the present disclosure is shown. The terminal 2300 includes: a processor 2301, a transceiver 2302, and a memory 2303.

The processor 2301 includes one or more processing cores, and the processor 2301 performs various functional applications and information processing by running software programs and modules.

The transceiver 2302 includes a receiver and a transmitter, which are implemented, for example, as the same radio communication assembly that includes a radio communication chip and a radio frequency antenna.

The memory 2303 is connected to the processor 2301 and the transceiver 2302.

The memory 2303 is configured to store computer programs executed by the processor, and the processor 2301 is configured to execute the computer programs to perform the processes executed by the terminal of the wireless communication system in the above method embodiments.

In addition, the memory 2303 is implemented by any type or combination of transitory or non-transitory storage devices including, but not limited to: magnetic or optical disks, electrically erasable programmable read-only memories, erasable programmable read-only memories, static random access memories, read-only memories, magnetic memories, flash memories, and programmable read-only memories.

In some embodiments, the transceiver 2302 is configured to send a first service access request to a relay terminal in a relay sidelink scenario, wherein the first service access request is configured to trigger the relay terminal to send a packet data unit (PDU) session modification request to network side device, and the PDU session modification request is configured to request the non-relay terminal to access the first broadcast/multicast service.

In some embodiments, the transceiver 2302 is configured to send a second service access request to a network side device, the second service access request being configured to request the non-relay terminal to access the first broadcast/multicast service.

For details about the processes performed by the transceiver 2302, reference may be made to the processes applicable to the terminal in the methods shown in FIG. 3, FIG. 4, FIG. 5, FIG. 7, FIG. 9, FIG. 11, FIG. 13, FIG. 15, FIG. 17, and FIG. 19.

In some embodiments , the transceiver is configured to receive a first service access request sent by a non-relay terminal in a relay sidelink scenario; and

the transceiver is further configured to send a PDU session modification request to a network side device based on the first service access request, the PDU session modification request being configured to request the terminal to access the first broadcast/multicast service.

For details about the processes performed by the transceiver 2302, reference may be made to the processes performed by the terminal in the methods shown in FIG. 3, FIG. 4, FIG. 5, FIG. 7, FIG. 9, FIG. 11, FIG. 13, FIG. 15, FIG. 17, and FIG. 19.

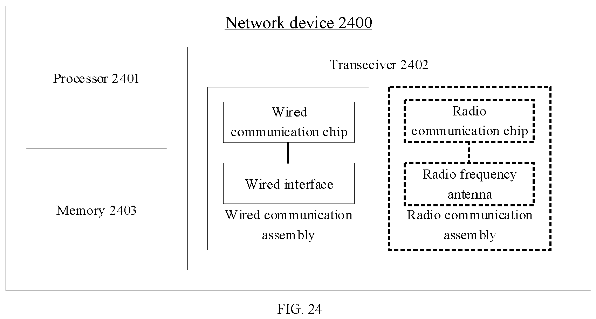

Referring to FIG. 24, a schematic structural diagram of a network device 2400 according to some embodiments of the present disclosure is shown. The network device 2400 includes: a processor 2401, a transceiver 2402, and a memory 2403.

The processor 2401 includes one or more processing cores, and the processor 2401 performs various functional applications and information processing by running software programs and modules.

The transceiver 2402 includes a receiver and a transmitter. For example, the transceiver 2402 includes a wired communication assembly that includes a wired communication chip and a wired interface (e.g., a fiber optic interface). In some embodiments, the transceiver 2402 further includes a radio communication assembly that includes a radio communication chip and a radio frequency antenna.

The memory 2403 is connected to the processor 2401 and the transceiver 2402.

The memory 2403 is configured to store computer programs executed by the processor, and the processor 2401 is configured to execute the computer programs to perform the processes performed by the non-relay terminal or relay terminal of the wireless communication system in the above method embodiments.

In addition, the memory 2403 is implemented by any type or combination of transitory or non-transitory storage devices including, but not limited to: magnetic or optical disks, electrically erasable programmable read-only memories, erasable programmable read-only memories, static random access memories, read-only memories, magnetic memories, flash memories, and programmable read-only memories.

In an exemplary solution, the transceiver 2402 is configured to receive a second service access request sent by a non-relay terminal in a relay sidelink scenario, the second service access request being configured to request the non-relay terminal to access the first broadcast/multicast service.

For details about the processes performed by the transceiver 2402 and the processor 2401 in the network device 2400, reference may be made to the processes performed by an UPF unit in the base station in the methods shown in FIG. 3, FIG. 4, FIG. 5, FIG. 7, FIG. 9, FIG. 11, FIG. 13, FIG. 15, FIG. 17, and FIG. 19.

In some embodiments, the transceiver 2402 is configured to receive a service access trigger request, the service access trigger request being configured to request the terminal in a relay sidelink scenario to access to the first broadcast/multicast service; and

the processor 2401, after verifying that the terminal has the permission to access the first broadcast/multicast service based on the service access trigger request, is configured to access the terminal to the first broadcast/multicast service.

For details about the processes performed by the transceiver 2402 and the processor 2401 in the network device 2400, reference may be made to the processes performed by an SMF unit in the base station in the methods shown in FIG. 3, FIG. 4, FIG. 5, FIG. 7, FIG. 9, FIG. 11, FIG. 13, FIG. 15, FIG. 17, and FIG. 19.

Some embodiments of the present disclosure further provide a computer-readable storage medium having computer programs stored therein. The computer programs, when loaded and executed by a processor of a terminal or a base station, cause the terminal or the base station to perform the processes performed by the terminal or the base station in the methods shown in FIG. 3, FIG. 4, FIG. 5, FIG. 7, FIG. 9, FIG. 11, FIG. 13, FIG. 15, FIG. 17, and FIG. 19.

Some embodiments of the present disclosure further provide a computer program product including computer instructions. The computer instructions are stored in a computer-readable storage medium, and a processor of a computer device, when reading and executing the computer instructions in the computer-readable storage medium, causes the computer device to perform the processes performed by the terminal or the base station in the methods shown in FIG. 3, FIG. 4, FIG. 5, FIG. 7, FIG. 9, FIG. 11, FIG. 13, FIG. 15, FIG. 17, and FIG. 19.

Some embodiments of the present disclosure further provide a chip. The chip, when running in a computer device, causes the computer device to perform the processes performed by the terminal or the base station in the methods shown in FIG. 3, FIG. 4, FIG. 5, FIG. 7, FIG. 9, FIG. 11, FIG. 13, FIG. 15, FIG. 17, and FIG. 19.

Some embodiments of the present disclosure further provide a computer program. The computer program, when executed by a processor of a computer device, causes the computer device to perform the processes performed by the terminal or the base station in the methods shown in FIG. 3, FIG. 4, FIG. 5, FIG. 7, FIG. 9, FIG. 11, FIG. 13, FIG. 15, FIG. 17, and FIG. 19.

Those skilled in the art should be appreciated that in one or more of the above embodiments, the functions described in the embodiments of the present disclosure may be implemented in hardware, software, firmware, or any combination thereof. The functions, when implemented in software, may be stored in a computer-readable medium or transmitted as one or more instructions or codes on a computer-readable medium. The computer-readable medium includes a computer storage medium and a communication medium, wherein the communication medium includes any medium that facilitates transfer of a computer program from one place to another. The storage medium may be any available medium that is accessible by a general-purpose or special-purpose computer.

Described above are merely exemplary embodiments of the present disclosure and are not intended to limit the present disclosure. Any modifications, equivalent substitutions, improvements, and the like, made within the spirit and principle of the present disclosure should fall within the protection scope of the present disclosure.

## Claims

1. An information interaction method for beam management, wherein the method is applicable to a terminal, and the method comprises:
providing beam information of a first beam set to a first base station, wherein the beam information of the first beam set is configured for the first base station to determine beam information of an output beam set based on a beam management model.

2. The information interaction method according to claim 1, wherein the output beam set comprises at least one of:
a second beam set acquired by restoring the beam information based on the beam management model; or
a third beam set acquired by beam selection based on the beam management model.

3. The information interaction method according to claim 1, wherein the first beam set, the second beam set, and the third beam set each comprise at least one of:
different beams belonging to a same base station;
different beams belonging to different base stations;
different beams belonging to a same frequency; or
different beams belonging to different frequencies.

4. The information interaction method according to claim 1, wherein the beam information comprises at least one of an identifier of the beam, quality of the beam, a frequency band of the beam, or base station information of the beam.

5. The information interaction method according to claim 3, wherein
the output beam set belongs to the first base station in a case that the first beam set belongs to a plurality of base stations;
the output beam set belongs to a plurality of base stations in a case that the first beam set belongs to the plurality of base stations; or
the output beam set belongs to the first base station in a case that the first beam set belongs to the first base station; or
the output beam set belongs to the plurality of base stations in a case that the first beam set belongs to the first base station.

6. The information interaction method according to claim 1, wherein providing the beam information of the first beam set to the first base station comprises:
transmitting the beam information of the first beam set to the first base station.

7. The information interaction method according to claim 1, wherein providing the beam information of the first beam set to the first base station comprises:
transmitting beam information of a first beam subset to a plurality of base stations in an interaction relationship with the terminal, wherein the plurality of base stations, other than the first base station, are configured to forward the beam information of the first beam subset to the first base station, and the first beam subset is a subset of the first beam set.

8. The information interaction method according to claim 7, wherein transmitting the beam information of the first beam subset to the plurality of base stations in an interaction relationship with the terminal comprises:
transmitting the beam information of the first beam subset corresponding to each of the plurality of base stations to the base station.

9. The information interaction method according to claim 7, wherein the beam information is transmitted among the plurality of base stations over at least one of an inter-base station interface, an inter-base station artificial intelligence-type data transmission channel, an inter-base station multicast channel, or a broadcast channel.

10. The information interaction method according to claim 1, wherein providing the first beam set to the first base station comprises:
transmitting the beam information of the first beam set to a plurality of base stations in an interaction relationship with the terminal, and the first beam set is configured for the plurality of base stations to determine the beam information of the output beam set corresponding to each base station.

11. The information interaction method according to any one of claims 1 to 10, further comprising:
receiving beam information of a reference signal set provided by at least one base station in an interaction relationship with the terminal; and
determining the first beam set based on the beam information of the reference signal set.

12. The information interaction method according to any one of claims 1 to 10, further comprising:
acquiring one group of beam sets configured by at least one base station in an interaction relationship with the terminal; and
determining the first beam set based on the group of beam sets.

13. The information interaction method according to claim 12, wherein determining the first beam set based on the group of beam sets comprises one of:
taking the group of beam sets as the first beam set;
taking a subset of the group of beam sets as the first beam set; or
taking a beam set satisfying a requirement in the group of beam sets as the first beam set.

14. The information interaction method according to any one of claims 1 to 10, further comprising:
receiving measurement configuration information pre-configured by at least one base station in an interaction relationship with the terminal.

15. The information interaction method according to any one of claims 1 to 10, further comprising:
receiving reporting configuration information pre-configured by at least one base station in an interaction relationship with the terminal.

16. The information interaction method according to claim 14 or 15, wherein the measurement configuration information is pre-configured by at least one of broadcasting, downlink control information (DCI), a medium access control element (MAC CE), a radio resource control (RRC) message, a downlink data channel, a downlink control channel, a downlink artificial intelligence-type data transmission channel, a downlink multicast channel, or an uplink broadcast channel.

17. The information interaction method according to claim 14 or 15, wherein pre-configuration content comprises at least one of identification information of a beam, a reference signal corresponding to a beam, measurement configuration corresponding to beam measurement, quality information to be measured of a beam, frequency band information of a beam, base station information of a beam, or a manner of reporting the first beam set.

18. The information interaction method according to any one of claims 1 to 10, wherein the terminal transmits the first beam set over at least one of an uplink data channel, an uplink control channel, an uplink artificial intelligence-type data transmission channel, an uplink multicast channel, or an uplink broadcast channel.

19. The information interaction method according to any one of claims 1 to 10, wherein the beam management model is an artificial intelligence(AI)-based beam management model or an AI-based beam management algorithm.

20. An information interaction method for beam management, wherein the method is applicable to a terminal, and the method comprises:
acquiring beam information of a first beam set; and
acquiring beam information of an output beam set by processing the beam information of the first beam set based on a beam management model.

21. The information interaction method according to claim 20, wherein the output beam set comprises at least one of:
a second beam set acquired by restoring the beam information based on the beam management model; or
a third beam set acquired by beam selection based on the beam management model.

22. The information interaction method according to claim 20, wherein the first beam set, the second beam set, and the third beam set each comprise at least one of:
different beams belonging to a same base station;
different beams belonging to different base stations;
different beams belonging to a same frequency; or
different beams belonging to different frequencies.

23. The information interaction method according to claim 22, wherein the beam information comprises at least one of an identifier of the beam, quality of the beam, a frequency band of the beam, and base station information of the beam.

24. The information interaction method according to claim 20, wherein acquiring the beam information of the first beam set comprises:
receiving beam information of a reference signal set provided by a plurality of base stations in an interaction relationship with the terminal; and
determining the beam information of the first beam set based on the reference signal set.

25. The information interaction method according to claim 24, wherein
the beam information of the output beam set belongs to a first base station of the plurality of base stations; and
the method further comprises:
reporting the beam information of the output beam set to the first base station.

26. The information interaction method according to claim 24, wherein
the beam information of the output beam set belongs to the plurality of base stations; and
the method further comprises:
reporting the beam information of the output beam set to the plurality of base stations.

27. The information interaction method according to claim 20, wherein acquiring the beam information of the first beam set comprises:
receiving beam information of a reference signal set provided by a first base station in an interaction relationship with the terminal; and
determining the beam information of the first beam set based on the reference signal set.

28. The information interaction method according to claim 27, wherein
the beam information of the output beam set belongs to the first base station; and
the method further comprises:
reporting the beam information of the output beam set to the first base station.

29. The information interaction method according to claim 27, wherein
the beam information of the output beam set belongs to a plurality of base stations in an interaction relationship with the terminal; and
the method further comprises:
reporting the beam information of the output beam set to the plurality of base stations.

30. The information interaction method according to any one of claims 20 to 29, wherein the method further comprises:
acquiring one group of beam sets configured by at least one base station in an interaction relationship with the terminal; and
determining the first beam set based on the group of beam sets.

31. The information interaction method according to claim 30, wherein determining the first beam set based on the group of beam sets comprises one of:
taking the group of beam sets as the first beam set;
taking a subset of the group of beam sets as the first beam set; or
taking a beam set satisfying a requirement in the group of beam sets as the first beam set.

32. The information interaction method according to any one of claims 20 to 29, further comprising:
receiving measurement configuration information pre-configured by at least one base station in an interaction relationship with the terminal.

33. The information interaction method according to any one of claims 20 to 29, further comprising:
receiving reporting configuration information pre-configured by at least one base station in an interaction relationship with the terminal.

34. The information interaction method according to claim 32 or 33, wherein the measurement configuration information is pre-configured by at least one of broadcasting, downlink control information (DCI), a medium access control element (MAC CE), a radio resource control (RRC) message, a downlink data channel, a downlink control channel, a downlink artificial intelligence-type data transmission channel, a downlink multicast channel, or an uplink broadcast channel.

35. The information interaction method according to claim 32 or 33, wherein pre-configuration content comprises at least one of identification information of a beam, a reference signal corresponding to a beam, measurement configuration corresponding to beam measurement, quality information to be measured of a beam, frequency band information of a beam, base station information of a beam, or a manner of reporting the first beam set.

36. The information interaction method according to any one of claims 20 to 29, wherein the terminal transmits the first beam set over at least one of an uplink data channel, an uplink control channel, an uplink artificial intelligence-type data transmission channel, an uplink multicast channel, or an uplink broadcast channel.

37. The information interaction method according to any one of claims 19 to 28, wherein the beam management model is an AI-based beam management model or an AI-based beam management algorithm.

38. An information interaction apparatus for beam management, comprising:
a first transmitting module, configured to provide beam information of a first beam set to a first base station, wherein the beam information of the first beam set is configured for the first base station to determine beam information of an output beam set based on a beam management model.

39. The information interaction apparatus according to claim 38, wherein the output beam set comprises at least one of:
a second beam set acquired by restoring the beam information based on the beam management model; or
a third beam set acquired by beam selection based on the beam management model.

40. The information interaction apparatus according to claim 39, wherein the first beam set, the second beam set, and the third beam set each comprise at least one of:
different beams belonging to a same base station;
different beams belonging to different base stations;
different beams belonging to a same frequency; or
different beams belonging to different frequencies.

41. The information interaction apparatus according to claim 38, wherein the beam information comprises at least one of an identifier of the beam, quality of the beam, a frequency band of the beam, or base station information of the beam.

42. The information interaction apparatus according to claim 40, wherein
the output beam set belongs to the first base station in a case that the first beam set belongs to a plurality of base stations;
the output beam set belongs to a plurality of base stations in a case that the first beam set belongs to the plurality of base stations;
the output beam set belongs to the first base station in a case that the first beam set belongs to the first base station; or
the output beam set belongs to a plurality of base stations in a case that the first beam set belongs to the first base station.

43. The information interaction apparatus according to claim 38, wherein
the first transmitting module is further configured to transmit the beam information of the first beam set to the first base station.

44. The information interaction apparatus according to claim 38, wherein
the first transmitting module is further configured to transmit beam information of a first beam subset to a plurality of base stations in an interaction relationship with the terminal, wherein the plurality of base stations, other than the first base station, are configured to forward the beam information of the first beam subset to the first base station, and the first beam subset is a subset of the first beam set.

45. The information interaction apparatus according to claim 44, wherein the first transmitting module is further configured to transmit the beam information of the first beam subset corresponding to each of the plurality of base stations to the base station.

46. The information interaction apparatus according to claim 44, wherein the beam information is transmitted among the plurality of base stations over at least one of an inter-base station interface, an inter-base station artificial intelligence-type data transmission channel, an inter-base station multicast channel, or a broadcast channel.

47. The information interaction apparatus according to claim 38, wherein
the first transmitting module is further configured to transmit the beam information of the first beam set to a plurality of base stations in an interaction relationship with the terminal, and the first beam set is configured for the plurality of base stations to determine the beam information of the output beam set corresponding to each base station.

48. The information interaction apparatus according to any one of claims 38 to 47, wherein
a first receiving module is configured to receive beam information of a reference signal set provided by at least one base station in an interaction relationship with the terminal; and
a first processing module is configured to determine the first beam set based on the beam information of the reference signal set.

49. The information interaction apparatus according to any one of claims 38 to 47, further comprising:
a first receiving module, configured to acquire one group of beam sets configured by at least one base station in an interaction relationship with the terminal; and
a first processing module, configured to determine the first beam set based on the group of beam sets.

50. The information interaction apparatus according to claim 49, wherein
the first processing module is further configured to take the group of beam sets as the first beam set; or
the first processing module is further configured to take a subset of the group of beam sets as the first beam set; or
the first processing module is further configured to take a beam set satisfying a requirement in the group of beam sets as the first beam set.

51. The information interaction apparatus according to any one of claims 38 to 47, wherein
a first receiving module is configured to receive measurement configuration information pre-configured by at least one base station in an interaction relationship with the terminal.

52. The information interaction apparatus according to any one of claims 38 to 47, wherein
a first receiving module is configured to receive reporting configuration information pre-configured by at least one base station in an interaction relationship with the terminal.

53. The information interaction apparatus according to claim 51 or 52, wherein the measurement configuration information is pre-configured by at least one of broadcasting, downlink control information (DCI), a medium access control element (MAC CE), a radio resource control (RRC) message, a downlink data channel, a downlink control channel, a downlink artificial intelligence (AI)-type data transmission channel, a downlink multicast channel, or an uplink broadcast channel.

54. The information interaction apparatus according to claim 51 or 52, wherein pre-configuration content comprises at least one of identification information of a beam, a reference signal corresponding to a beam, measurement configuration corresponding to beam measurement, quality information to be measured of a beam, frequency band information of a beam, base station information of a beam, or a manner of reporting the first beam set.

55. The information interaction apparatus according to any one of claims 38 to 47, wherein the terminal transmits the first beam set over at least one of an uplink data channel, an uplink control channel, an uplink artificial intelligence-type data transmission channel, an uplink multicast channel, or an uplink broadcast channel.

56. The information interaction apparatus according to any one of claims 38 to 47, wherein the beam management model is an artificial intelligence (AI)-based beam management model or an AI-based beam management algorithm.

57. An information interaction apparatus for beam management, comprising:
a second receiving module, configured to acquire beam information of a first beam set; and
a second processing module, configured to process the beam information of the first beam set based on a beam management model to acquire beam information of an output beam set.

58. The information interaction apparatus according to claim 57, wherein the output beam set comprises at least one of:
a second beam set acquired by restoring the beam information based on the beam management model; or
a third beam set acquired by beam selection based on the beam management model.

59. The information interaction apparatus according to claim 57, wherein the first beam set, the second beam set, and the third beam set each comprise at least one of:
different beams belonging to a same base station;
different beams belonging to different base stations;
different beams belonging to a same frequency; or
different beams belonging to different frequencies.

60. The information interaction apparatus according to claim 59, wherein the beam information comprises at least one of an identifier of the beam, quality of the beam, a frequency band of the beam, and base station information of the beam.

61. The information interaction apparatus according to claim 59, wherein
the second receiving module is further configured to receive beam information of a reference signal set provided by a plurality of base stations in an interaction relationship with the terminal; and
determine the beam information of the first beam set based on the reference signal set.

62. The information interaction apparatus according to claim 61, wherein the beam information of the output beam set belongs to a first base station of the plurality of base stations; and
a second transmitting module is configured to report the beam information of the output beam set to the first base station.

63. The information interaction apparatus according to claim 61, wherein the beam information of the output beam set belongs to the plurality of base stations; and
a second transmitting module is configured to report the beam information of the output beam set to the plurality of base stations.

64. The information interaction apparatus according to claim 57, wherein the second receiving module is further configured to:
receive beam information of a reference signal set provided by a first base station in an interaction relationship with the terminal; and
determine the beam information of the first beam set based on the reference signal set.

65. The information interaction apparatus according to claim 64, wherein the beam information of the output beam set belongs to the first base station; and
a second transmitting module is configured to report the beam information of the output beam set to the first base station.

66. The information interaction apparatus according to claim 64, wherein the beam information of the output beam set belongs to a plurality of base stations in an interaction relationship with the terminal; and
a second transmitting module is configured to report the beam information of the output beam set to the plurality of base stations.

67. The information interaction apparatus according to any one of claims 57 to 66, wherein
the second receiving module is further configured to acquire one group of beam sets configured by at least one base station in an interaction relationship with the terminal; and
the second processing module is further configured to determine the first beam set based on the group of beam sets.

68. The information interaction apparatus according to claim 67, wherein
the second processing module is further configured to take the group of beam sets as the first beam set; or
the second processing module is further configured to take a subset of the group of beam sets as the first beam set; or
the second processing module is further configured to take a beam set satisfying a requirement in the group of beam sets as the first beam set.

69. The information interaction apparatus according to any one of claims 57 to 66, wherein
the second receiving module is further configured to receive measurement configuration information pre-configured by at least one base station in an interaction relationship with the terminal.

70. The information interaction apparatus according to any one of claims 57 to 66, wherein
the second receiving module is further configured to receive reporting configuration information pre-configured by at least one base station in an interaction relationship with the terminal.

71. The information interaction apparatus according to claim 69 or 70, wherein the measurement configuration information is pre-configured by at least one of broadcasting, downlink control information (DCI), a medium access control element (MAC CE), a radio resource control (RRC) message, a downlink data channel, a downlink control channel, a downlink artificial intelligence (AI)-type data transmission channel, a downlink multicast channel, or an uplink broadcast channel.

72. The information interaction apparatus according to claim 69 or 70, wherein pre-configuration content comprises at least one of identification information of a beam, a reference signal corresponding to a beam, measurement configuration corresponding to beam measurement, quality information to be measured of a beam, frequency band information of a beam, base station information of a beam, or a manner of reporting the first beam set.

73. The information interaction apparatus according to any one of claims 57 to 66, wherein the terminal transmits the first beam set over at least one of an uplink data channel, an uplink control channel, an uplink artificial intelligence-type data transmission channel, an uplink multicast channel, or an uplink broadcast channel.

74. The information interaction apparatus according to any one of claims 57 to 66, wherein the beam management model is an artificial intelligence (AI)-based beam management model or an AI-based beam management algorithm.

75. A terminal, comprising:
a processor;
a transceiver connected to the processor; and
a memory configured to store one or more instructions executable by the processor,
wherein the processor is configured to load and execute the one or more instructions to perform the information interaction method for beam management as defined in any one of claims 1 to 19, or to perform the information interaction method for beam management as defined in any one of claims 20 to 37.

76. A computer-readable storage medium storing at least one instruction, at least one program, a code set, or an instruction set, wherein the at least one instruction, the at least one program, the code set, or the instruction set, when loaded and executed by a processor, causes the processor to perform the information interaction method for beam management as defined in any one of claims 1 to 19, or to perform the information interaction method for beam management as defined in any one of claims 20 to 37.
